# EUROPEAN PATENT APPLICATION

(11) **EP 4 645 553 A1**
(43) Date of publication of application: **05.11.2025**
(21) Application number: 23911495.2
(22) Date of filing: 27.11.2023
(51) Int. Cl.: H01M 50/262, H01M 50/209, H01M 50/264, H01M 50/291, H01M 50/35

(54) **BATTERY PACK**

(30) Priority: 27.12.2022 JP 2022209158
(71) Applicant: Vehicle Energy Japan Inc., Ibaraki 312-8505 (JP)
(72) Inventor: KOSAI Koji, Hitachinaka-shi, Ibaraki 312-8505 (JP)
(74) Representative: Strehl & Partner mbB
(86) International application number: PCT/JP2023/042428
(87) International publication number: WO 2024/142714

(57) **Abstract**

A battery pack capable of lashing a battery group without using a side rail that connects a pair of end plates together is obtained. A battery pack 1 of the present invention has a battery main body 20 having a battery group 30 in which a plurality of single batteries 31 have been laminated and a pair of end plates 40 that are respectively disposed at both ends of the battery group 30 in a lamination direction, an installation portion in which the battery main body 20 is installed, and brackets 50 that fix the battery main body 20 to the installation portion, and the brackets 50 hold the battery main body 20 in a state of being pressurized in the lamination direction.

## Description

### Technical Field

The present invention relates to a battery pack.

### Background Art

For example, a structure of a battery pack in which a laminated cell group sandwiched with a pair of end plates is lashed together with a side rail is known. The side rail extends along a lamination direction of the laminated cell group and is a highly rigid structure capable of withstanding a lashing force.

### Citation List

### Patent Literature

Patent Literature 1: Japanese Patent Application Publication No. 2018-73518
Patent Literature 2: Japanese Patent Application Publication No. 2017-76504
Patent Literature 3: WO 2013/038520

### Summary of Invention

### Technical Problem

However, the use of a highly rigid side rail to lash a laminated cell group creates a concern of high cost and high weight.

The present invention has been made in consideration of the above-described point, and an object of the present invention is to provide a battery pack in which a laminated cell group is lashed without using a side rail.

### Solution to Problem

A battery pack of the present invention that addresses the above-described problem is a battery pack having
a battery main body having a battery group in which a plurality of single batteries have been laminated and a pair of end plates that are respectively disposed at both ends of the battery group in a lamination direction,
an installation portion in which the battery main body is installed, and
fixing members that each fix the battery main body to the installation portion,
in which the fixing members each hold the battery main body in a state of being pressurized in the lamination direction of the battery group.

### Advantageous Effects of Invention

According to the present invention, since the battery main body is held in a state of being pressurized in the lamination direction of the battery group by the fixing members that each fix the battery main body to the installation portion, there is no need to separately provide a lashing part such as a conventional side rail. Therefore, it is possible to reduce the amount of a part material, and cost reduction and weight reduction can be achieved.

An additional feature relating to the present invention will be clarified from descriptions in the present specification and accompanying drawings. In addition, a problem, a configuration, and an effect that are not what has been described above will be clarified by the following description of the embodiment.

### Brief Description of Drawings

[Fig. 1]

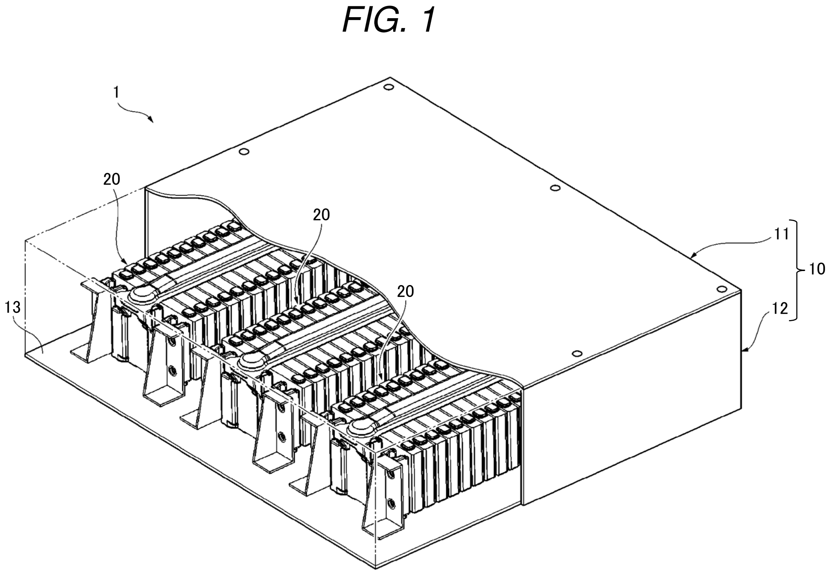

   Fig. 1 is an overall perspective view of a battery pack relating to a first embodiment.
[Fig. 2]

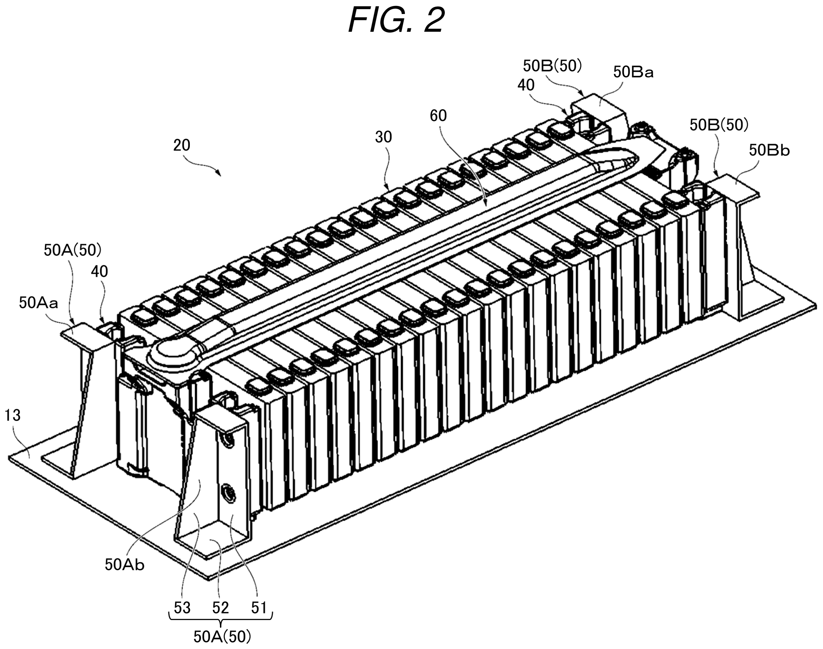

   Fig. 2 is a perspective view of a battery main body in the battery pack relating to the first embodiment.
[Fig. 3]

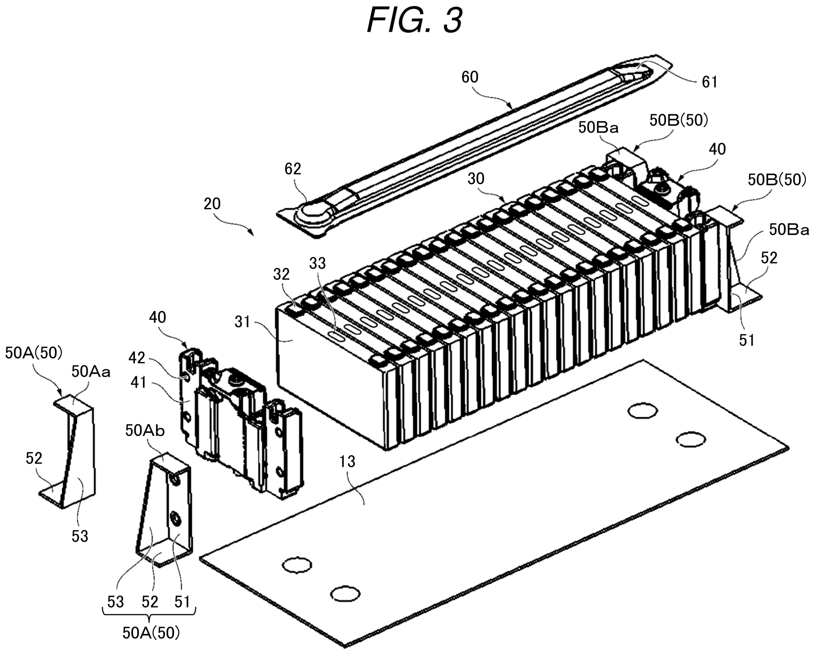

   Fig. 3 is an exploded perspective view of Fig. 2.
[Fig. 4]

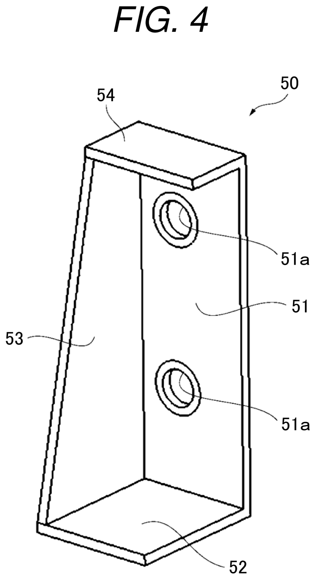

   Fig. 4 is a perspective view showing one example of a bracket relating to the first embodiment.
[Fig. 5]

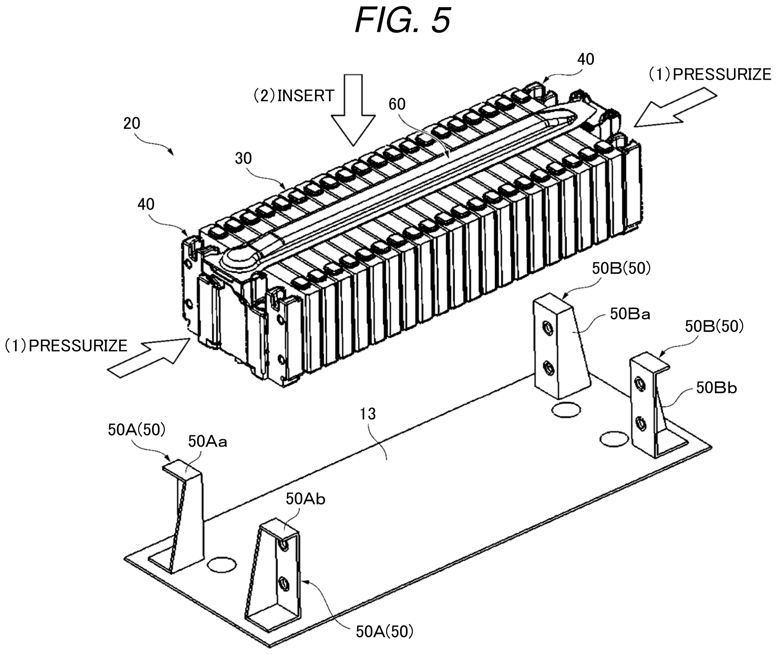

   Fig. 5 is a view for describing a manufacturing process of the battery pack relating to the first embodiment.
[Fig. 6]

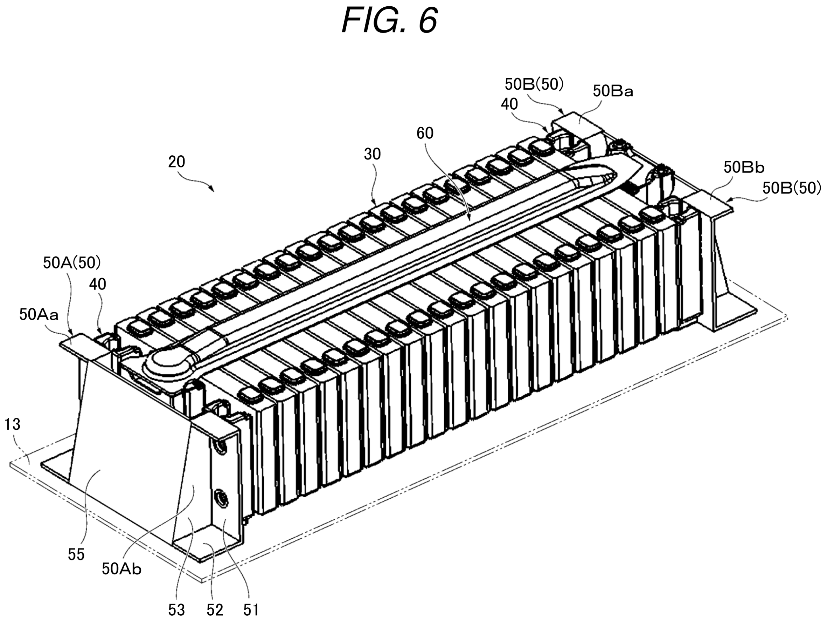

   Fig. 6 is a perspective view of a battery main body in a battery pack relating to a second embodiment.

### Description of Embodiments

Next, embodiments of the present invention will be described.

### <First Embodiment>

Fig. 1 is an overall perspective view of a battery pack relating to a first embodiment, Fig. 2 is a perspective view showing a battery main body in the battery pack relating to the first embodiment, Fig. 3 is an exploded perspective view of the battery pack shown in Fig. 2, and Fig. 4 is a perspective view showing one example of a bracket relating to the first embodiment. Fig. 1 does not show a part of an exterior body and partially shows the inside of the exterior body. In addition, for convenience, a height direction, a width direction, and a thickness direction of a single battery 31 will be referred to as an up and down direction, a right and left direction, and a front and back direction, respectively, in the description, but do not limit the actual installation posture of a battery pack 1.

The battery pack 1 is mounted in, for example, an electric vehicle and is used as a power source that supplies electricity to the travel motor. The battery pack 1 has an exterior body 10 and a plurality of battery main bodies 20 that are accommodated in the exterior body 10 as shown in Fig. 1. The battery main bodies 20 are installed on an installation portion (a bottom plate portion 13 of the exterior body 10 in the present example).

The exterior body 10 is formed in a box shape using a thin steel plate of a highly rigid steel or the like and has the substantially rectangular bottom plate portion 13, four substantially rectangular vertical plate portions 12 that vertically rise from individual sides of the bottom plate portion 13, and a substantially rectangular top plate portion 11 that is placed face to face with the bottom plate portion 13. The exterior body 10 has an accommodation space in which the plurality of battery main bodies 20 are disposed in parallel.

The bottom plate portion 13 preferably has a higher rigidity in the part where the battery main bodies 20 are installed than in a surrounding part thereof. For example, a configuration in which the plate thickness is thicker in the part where the battery main bodies 20 are installed than in the surrounding part thereof or a configuration in which a reinforcing plate is installed in a fixation portion where the battery main bodies 20 are fixed (for example, fixation portions on the bottom plate portion 13 to which brackets 50, which will be described below, are fixed) is possible.

In addition, in a case where the bottom plate portion 13 is wider than the battery main bodies 20 or the like, in the bottom plate portion 13, a part where the battery main bodies 20 are fixed may have a higher rigidity than the surrounding part, and a configuration in which the plate thickness of a region including the fixation portion where the battery main bodies 20 are fixed becomes thicker than a region outside thereof or a configuration in which a reinforcing plate is installed in the region including the fixation portion where the battery main bodies 20 are fixed is also possible.

The battery main body 20 has a battery group 30 that is a laminated cell group in which a plurality of the single batteries 31 are laminated with a spacer interposed therebetween and a pair of end plates 40 that are disposed at both ends of the battery group 30 in the lamination direction as shown in Fig. 3.

The battery group 30 is configured by laminating the plurality of single batteries 31 in the thickness direction in a state where a resin spacer (not shown) is sandwiched between the single batteries 31 adjacent to each other. The single battery 31 is a square lithium-ion secondary battery having a pair of wide surface portions that face each other, electrode terminals 32 of a positive electrode and a negative electrode are disposed at separate positions in both ends of a lid portion in the right and left direction, and a cleavage valve 33 that is cleaved due to an increase in the internal pressure of the single battery 31 and discharges the gas is disposed at a central position of the lid portion in the right and left direction. In the battery group 30, the plurality of single batteries 31 are laminated together such that the positive electrodes and the negative electrodes of the electrode terminals 32 are alternately arranged in the lamination direction.

In the battery main body 20, a gas duct 60 that is a gas discharge portion is disposed at a position facing the lid portions of the individual single batteries 31. The gas duct 60 is a conductive pathway for discharging a gas that is discharged from the cleavage valves 33 to the outside and extends along the lamination direction of the battery group 30 in the upper portion of the battery main body 20. The gas duct 60 is fastened to one end plate 40 and the other end plate 40 with bolts at both end portions, respectively. The gas duct 60 also plays a role of a reinforcing member for receiving the lashing load of the battery group 30.

In the battery group 30, the right and left side surfaces of the single battery 31 are not blocked with side rails, unlike in the related art, and are exposed, which makes it possible to improve the cooling efficiency of the single battery 31 more than in the related art. In the present example, the right and left side surfaces of the single batteries 31 in the battery group 30 are exposed to the inner surfaces (internal spaces) of the exterior body 10.

The pair of end plates 40 sandwich the battery group 30 from both sides in the lamination direction and transfers the lashing load to the battery group 30. The end plates 40 are composed of metal block members that are almost as large as the single battery 31. The end plate 40 has an inner surface that is pressed against the wide surface of the single battery 31 and an outer surface that is positioned on a side opposite to the inner surface and is exposed to the outside in the lamination direction at an end portion of the battery group 30 in the lamination direction. Bolt holes 42 for fixing the end plate 40 to the brackets 50 are provided on an outer surface 41 of the end plate 40. The bolt holes 42 are provided at positions spaced apart in both sides of the end plate 40 in the width direction, which is a direction orthogonal to the lamination direction of the battery group 30, respectively, to form the end plate 40 along the lamination direction of the battery group 30 (the bolt holes may be through holes).

The battery main body 20 having the above-described configuration is integrally fixed to the exterior body 10 with the brackets 50, which are fixing members. The brackets 50 are configured to hold the battery group 30 in a state of being pressurized in the lamination direction to fix the battery main body 20 to the exterior body 10. In the following description, the bracket 50 will be referred to as 50A, 50B, 50Aa, 50Ab, 50Ba, and 50Bb in some cases.

The brackets 50 are fixed to the fixation portions formed in advance on the bottom plate portion 13 of the exterior body 10 and play a role of holding the lashing load applied to the battery group 30 through the end plates 40. The brackets 50 are provided at positions spaced apart from each other on one side and the other side of the battery group 30 in the lamination direction (50A and 50B) as shown in Fig. 2, and the battery group 30 is inserted between these brackets 50A and 50B in a state of being pressurized in the lamination direction to fix both end portions of the battery main bodies 20 in the lamination direction, respectively. The brackets 50A and 50B are provided at positions having an interval that is wider than the total length of the battery main bodies 20 when the battery main bodies 20 are pressurized in the lamination direction and is shorter than the total length of the battery main bodies 20 when not being pressurized.

The brackets 50A and 50B are disposed at positions spaced apart in both sides of the end plates 40 in the width direction and are disposed at the four corners of the battery main bodies 20. The bracket 50A has a bracket 50Aa that is disposed to face the end portion of the end plate 40 on one side in the width direction and a bracket 50Ab that is disposed to face the end portion of the end plate 40 on the other side in the width direction. In addition, the bracket 50B has a bracket 50Ba that is disposed to face the end portion of the end plate 40 on one side in the width direction and a bracket 50Bb that is disposed to face the end portion of the end plate 40 on the other side in the width direction.

The brackets 50Aa, 50Ab, 50Ba, and 50Bb are disposed at the end portions of the battery main bodies 20 and along the four sides of the battery main bodies 20 that extend in the height direction, respectively. The brackets 50Aa, 50Ab, 50Ba, and 50Bb are provided apart from each other on both sides of the end plates 40 in the width direction to expose the central portions of the end plates 40.

The bracket 50 is configured by, for example, three-dimensionally bending one steel plate and assembling the steel plate by partial welding or joining a plurality of steel plate parts together by welding and assembling the steel plate parts. As shown in Fig. 4, the bracket 50 has a first thin plate portion 51 that extends along the height direction of the battery main body 20, faces the end plate 40, and is abutted onto the outer surface 41, a second thin plate portion 52 that is bent at the bottom end of the first thin plate portion 51 and is disposed along and fixed to the bottom plate portion 13 of the exterior body 10, a third thin plate portion 53 that is disposed perpendicular to the first thin plate portion 51 and the second thin plate portion 52 and joins the plate side surfaces, and a top plate 54 that connects the upper end of the first thin plate portion 51 and the upper end of the third thin plate portion 53 and is disposed parallel to the second thin plate portion 52.

The first thin plate portion 51 has through holes 51a formed at positions communicating with the bolt holes 42 in the end plate 40. The end plate 40 can be fixed to the bracket 50 by inserting bolts from the through holes 51a in the first thin plate portion 51 to the bolt holes 42 in the end plate 40 to fasten the end plate and the bracket. The bracket 50 is fixed to the exterior body 10 by welding or fastening, with bolts, the second thin plate portion 52 to the bottom plate portion 13 of the exterior body 10. The fastening direction of the bracket 50 and the end plate 40 is the same as the lamination direction of the battery group 30.

The bracket 50 has a cantilever support column structure in which the base end is fixed to the bottom plate portion 13 of the exterior body 10, the front end is a free end, and the lashing load of the battery group 30 is received across the entire length. The third thin plate portion 53 of the bracket 50 is disposed perpendicular to the outer surface 41 of the end plate 40 and plays a role of a reinforcing rib that reinforces the rigidity of the first thin plate portion 51.

In the present example, an example of the battery pack 1 in which the battery group 30 is disposed such that a surface opposite to the surface of the single battery 31 having the electrode terminals 32 faces the bottom plate portion 13, which is the installation portion, has been described. While not shown, a disposition in which the relationship between the battery group 30 and the bottom plate portion 13 is vertically inverted is also possible. For example, the battery group 30 is disposed such that the surface of the single battery 31 having the electrode terminals 32 faces the bottom plate portion 13, which is the installation portion where the battery group 30 is installed. This makes it easy to dispose a heat exchange member (preferably having a cooling or warming action) to face the surface opposite to the surface having the electrode terminals 32. The disposition configuration vertically inverted as described above is preferable in the case of using a high-output single battery 31.

Fig. 5 is a view for describing an assembling process of the battery pack relating to the present embodiment.

The battery pack 1 is assembled by the following steps.

Step S1: The end plates 40 are disposed at both end portions of the battery group 30 in the lamination direction to form the battery main bodies 20, and the battery main bodies 20 are pressurized in the lamination direction using a jig. The battery main bodies 20 elastically deform due to the pressurization with the jig and shrink in the lamination direction of the battery group 30.

Step S2: The battery main bodies 20 held in a pressurized state are inserted between the pair of brackets 50A and 50B that are apart in the lamination direction and face each other. Here, since the brackets 50Aa and 50Ab and 50Ba and 50Bb are apart from each other in both sides of the end plates 40 in the width direction to expose the central parts of the end plates 40, it is possible to insert the jig used to pressurize the battery main bodies 20 in the lamination direction into the central parts of the end plates 40 and to insert the battery main bodies 20 between the brackets 50A and 50B while maintaining the pressurized state.

Step S3: The jig is removed to release the pressurization of the battery main bodies 20 with the jig.

The battery main body 20 has a dimensional shape in which the length in the lamination direction is longer than the separation interval in the lamination direction between the pair of brackets 50A and 50B while the battery main body is not pressurized; however, when the battery main body is pressurized, the length in the lamination direction becomes shorter than the separation interval in the lamination direction between the pair of brackets 50A and 50B due to the elastic deformation. Therefore, in a case where the pressurization with the jig has been released in a state where the battery main bodies 20 held in the pressurized state have been inserted and disposed between the pair of brackets 50, the battery main bodies 20 tend to return to the original size before the pressurization from the state of being shrunk in the lamination direction due to the elastic deformation, but are not capable of returning to the original size before the pressurization and are held in a state of being pressurized between the pair of brackets 50. That is, the battery main bodies 20 are lashed by a predetermined lashing load with the pair of brackets 50. A configuration in which shims for thickness adjustment are inserted between the battery main bodies 20 and the brackets 50A and 50B to adjust the length of the battery group 30 in the lamination direction and the battery main bodies 20 are held between the pair of brackets 50A and 50B by a desired pressurization load is also possible.

Step S4: The end plates 40 and the brackets 50 are fastened with bolts. As a result, the battery main bodies 20 are fixed to the bottom plate portion 13 of the exterior body 10 through the pair of brackets 50A and 50B and are held in a state of being pressurized in the lamination direction utilizing the rigidity of the exterior body 10.

According to the battery pack 1 of the present embodiment, the battery main bodies 20 are held between the pair of brackets 50A and 50B fixed to the exterior body 10 in a state of being pressurized in the lamination direction. The lashing load that the pair of brackets 50A and 50B receive from the battery main bodies 20 is supported by the exterior body 10. Therefore, there is no need to separately provide exclusive parts, such as side rails that connect the pair of end plates 40 to lash the battery main bodies 20, unlike in the related art. Therefore, it is possible to reduce the amount of a part material, and cost reduction and weight reduction can be achieved. As one example, the brackets 50 require 70% of the amount of a material for a portion where side rails are used, and the unuse of side rails makes it possible to reduce the cost by 30% and reduce the weight.

In addition, in the present embodiment, the pair of brackets 50A and 50B are each divided into one side and the other side of the end plates 40 in the width direction to form the brackets 50Aa and 50Ab and the brackets 50Ba and 50Bb, whereby the manufacturing of the brackets 50 becomes easy, it becomes easy to achieve the precision of the position of the exterior body 10 with respect to the bottom plate portion 13, and the exterior body can be precisely disposed.

In the above-described example, the method in which the pair of brackets 50 are fixed to the bottom plate portion 13 of the exterior body 10 in advance, and the battery main bodies 20 pressurized in the lamination direction are then inserted between the pair of brackets 50 and fixed to the pair of brackets 50 by the step S2 and the step S3 has been described, but the battery main bodies can also be fixed by a different method. For example, a method in which, instead of the step S2 and the step S3, the battery main bodies 20 are pressed and pressurized against the bracket 50A on one side in the lamination direction from the other side in the lamination direction and the bracket 50B on the other side in the lamination direction is fixed to the bottom plate portion 13 of the exterior body 10 in this state may also be employed.

In the present structure, the configuration in which the end plates 40 are fixed to the brackets 50 and the brackets 50 are fixed to the fixation portions on the bottom plate portion 13 has been described. In the present structure, since the end plates 40 are not fixed to the bottom plate portions 13, it is possible to simplify the structure of the end plates 40 and improve the manufacturability. As another structure, both the end plates 40 and the brackets 50 may be fixed to the fixation portions on the bottom plate portion 13, which makes it possible to stably fix the battery main bodies 20 to the bottom plate portion 13.

Regarding the width of the bracket 50 in the battery lamination direction, the base end side of the bracket 50 facing the bottom plate portion 13 is formed to be wider than the front end side apart from the bottom plate portion 13. That is, the bracket 50 is formed such that the width in the battery lamination direction becomes wider toward the base end from the front end. The width in the battery lamination direction being made to be wider in the base end of the bracket than in the front end makes it possible to stably support the load that lashes the single batteries 31. For example, in the bracket 50, the width in the battery lamination direction is made to be larger twice or more in the base end that is disposed on the bottom plate portion 13 side than in the front end that protrudes from the bottom plate portion 13. This makes it possible to stably fix the battery group 30 to the bottom plate portion 13.

The battery pack 1 of the present embodiment does not have side rails that connect the end plates, unlike in conventional structures, and there are thus preferable matters as described below.

First, the side surfaces of the laminated single batteries 31 (the surfaces in a direction orthogonal to the placement direction) face the exterior body 10 in which the battery main bodies 20 are placed or the space in the exterior body 10. That is, the side surfaces do not face any parts of the battery main bodies 20, but face a surrounding member of the battery main bodies 20. For example, in a case where the side wall of the exterior body 10 or different battery main bodies 20 adjacent thereto are arranged in parallel, the side surfaces face the battery main bodies 20.

In a case where there are side rails that connect the end plates as in the related art, the side surfaces of the single batteries are blocked from the internal space of the exterior body 10. In the present embodiment, there is no configuration part of the battery main body 20 that blocks the side surfaces of the single batteries 31, which is preferable from the viewpoint of heat dissipation of the single batteries 31. In addition, there are no structural members that are disposed to face and be adjacent to the side walls of the single batteries 31, like side rails, and it is thus possible to suppress water droplets arising from the condensation of a structural member or the like affecting the single batteries 31.

In the present embodiment, the configuration in which the brackets 50 are provided in the end plates 40 to add a lashing force to the laminated single batteries 31 has been disclosed, but it is also conceivable that the end plate 40 and the bracket 50 are integrally structured. In that case, the structure of the end plate 40 is configured such that the width in the battery lamination direction becomes wider twice or more in the base end on the bottom plate portion 13 side than in the front end apart from the bottom plate portion 13 side in the placement direction of the end plate 40.

This can contribute to the stable fixation of the battery group 30 to the bottom plate portion 13. In this case, there is a need to change the manufacturing method described above. For example, it is conceivable that the laminated single batteries 31 are sandwiched with members obtained by integrally structuring the end plate 40 and the bracket 50 and fixed to the bottom plate portion 13 in a state where a lashing force has been applied thereto.

In the present example, the lashing force on the laminated single batteries 31 adds, for example, a load from which a lashing effect can be obtained. For example, the lashing force is preferably set to 3 kilonewtons [kN] or higher. In addition, the lashing force is preferably set to 7 kilonewtons [kN] or lower.

In addition, in the present example, the case where the gas duct 60 plays a role of a reinforcing member for receiving the lashing load of the battery group 30 has been described, but the load for lashing is added mainly by the brackets 50. Therefore, a case where the gas duct 60 does not play a role of a reinforcing member for receiving the lashing load of the battery group 30 is also conceivable. The lashing load is substantially added by the brackets 50. In a case where there is a fixation portion to the bottom plate portion 13 in the end plate 40, the end plate 40 may also contribute to the lashing role. This makes it possible to increase the degree of freedom in design such as the weight reduction of the gas duct 60. In the present example, the configuration in which the battery main bodies 20 are accommodated in the exterior body 10, that is, a case where a configuration in which the battery main bodies 20 are installed is the exterior body 10 has been described as an example, but a configuration in which only a bottom plate that corresponds to the bottom plate portion 13 is used instead of the exterior body 10 and the battery main bodies 20 are installed on the bottom plate is also possible.

### <Second Embodiment>

Next, a second embodiment of the present invention will be described using Fig. 6. The same configuration elements as in the first embodiment will be given the same reference signs and will not be described in detail again.

A feature of the present embodiment is that the right and left brackets 50Aa and 50Ab and brackets 50Ba and 50Bb, which are separated in the width direction orthogonal to the lamination direction in the first embodiment, are connected to each other to form an integral structure.

The bracket 50A has an integral structure in which the third thin plate portion 53 of the bracket 50Aa and the third thin plate portion 53 of the bracket 50Ab that are adjacent to each other in the width direction are connected together with a fourth thin plate portion 55. Therefore, it is possible to reduce the amount of a part material and reduce the manufacturing cost by simplifying an assembly work.

Hitherto, the embodiments of the present invention have been described in detail, but the present invention is not limited to the above-described embodiments, and it is also possible to perform a variety of design changes without departing from the gist of the present invention described in the claims.

### Reference Signs List

- 10: Exterior body
- 13: Bottom plate portion
- 20: Battery main body
- 30: Battery group
- 31: Single battery
- 32: Electrode terminal
- 40: End plate
- 42: Bolt hole
- 50, 50A, 50B, 50Aa, 50Ab, 50Ba, 50Bb: Bracket
- 51: First thin plate portion
- 52: Second thin plate portion
- 53: Third thin plate portion
- 60: Gas duct (gas discharge portion)

## Claims

1. A battery pack comprising:
a battery main body having a battery group in which a plurality of single batteries have been laminated and a pair of end plates that are respectively disposed at both ends of the battery group in a lamination direction;
an installation portion in which the battery main body is installed; and
fixing members that each fix the battery main body to the installation portion,
wherein the fixing members each hold the battery main body in a state of being pressurized in the lamination direction of the battery group.

2. The battery pack according to claim 1,
wherein the fixing members each have a pair of brackets that are each disposed at an end portion of the battery main body on one side in the lamination direction and at an end portion on the other side in the lamination direction, and
the pair of brackets are each disposed with an interval therebetween that is wider than a total length of the battery main body in a state where the battery main body has been pressurized in the lamination direction and is shorter than the total length of the battery main body in a state where the battery main body is not pressurized.

3. The battery pack according to claim 2,
wherein a fastening direction of the end plates and the brackets is the same as the lamination direction.

4. The battery pack according to claim 3,
wherein the brackets have been fastened to both ends of the battery main body in the lamination direction.

5. The battery pack according to claim 4,
wherein the brackets respectively face end portions of the battery main body in the lamination direction and are respectively disposed along positions of four sides that extend along a height direction of the battery main body.

6. The battery pack according to claim 5,
wherein the bracket each have at least a first thin plate portion that extends along the height direction of the battery main body and has a fastening portion to the end plate,
a second thin plate portion that extends along the installation portion from an end side of the first thin plate portion and is fixed to the installation portion, and
a third thin plate portion that is disposed perpendicular to the first thin plate portion and the second thin plate portion and joins plate side surfaces.

7. The battery pack according to claim 1, further comprising:
a gas discharge portion that extends in the lamination direction in an upper portion of the battery main body,
wherein both end portions of the gas discharge portion are respectively fastened to the pair of end plates.

8. The battery pack according to claim 1,
wherein, in the battery group, a side surface of the single battery is exposed to an outside of the battery main body.

9. The battery pack according to claim 1, further comprising:
an exterior body in which the battery main body is accommodated,
wherein, in the battery group, a side surface of the single battery is exposed to an inner surface of the exterior body.
